Europäisches Patentamt

(19) European Patent Office

Office européen des brevets

(11) Numéro de publication: **0 030 327**
**B1**

(12) FASCICULE DE BREVET EUROPEEN

(45) Date de publication du fascicule du brevet: **24.10.84**

(51) Int. Cl.³: **A 23 L 1/22,** A 23 L 1/227

(21) Numéro de dépôt: **80107389.1**

(22) Date de dépôt: **26.11.80**

(54) **Procédé de fabrication d'un agent aromatisant.**

(30) Priorité: **07.12.79 CH 10851/79**

(43) Date de publication de la demande:
**17.06.81 Bulletin 81/24**

(45) Mention de la délivrance du brevet:
**24.10.84 Bulletin 84/43**

(84) Etats contractants désignés:
**AT DE FR IT NL**

(56) Documents cités:
**FR-A-1 424 194**
**FR-A-1 471 831**
**FR-A-2 181 585**
**FR-A-2 321 851**
**FR-A-2 321 852**
**GB-A- 858 660**

(73) Titulaire: **SOCIETE DES PRODUITS NESTLE S.A.**
**Case postale 353**
**CH-1800 Vevey (CH)**

(72) Inventeur: **Guggenbuehler, Max**
**Schulackerstrasse 371**
**CH-8501 Hagenbuch (CH)**
Inventeur: **Heyland, Sven**
**Im Rohr**
**CH-8501 Warth (CH)**

Courier Press, Leamington Spa, England.

## Description

La présente invention a pour objet un procédé de fabrication d'un agent aromatisant dont le goût rappelle celui de la viande, du poisson ou des champignons, dans lequel on fait réagir par chauffage un mélange liquide ou pâteux contenant au moins une source d'acides aminés libres et des additifs comprenant au moins un monosaccharide et, le cas échéant, au moins une substance contenant du soufre.

Les premiers agents aromatisants dont la saveur devait rappeler celle de la viande cuite ou rôtie préparés à partir d'autolysats de levure ou d'hydrolysats de protéines végétale ou animale et d'un sucre réducteur par le biais de la réaction de Maillard souffraient d'imperfections notoires tant au point de vue du goût que de celui de la conservation. Au fil des années ces produits se sont améliorés toujours davantage grâce à la mise au point de procédés de fabrication toujours plus raffinés. Une amélioration importante fut acquise lorsqu'il fut établi que la saveur de la viande n'était vraiment rendue par le produit de la réaction de Maillard que si celle-ci s'effectuait en présence de soufre, et plus particulièrement en présence d'une substance contenant du soufre.

FR—A—1 424 134 décrit une autre amélioration consistant à renoncer à réaliser la réaction au reflux dans une grande quantité d'eau, ce qui donnait des produits fades et peu stables, pour adopter un mode de travail en suspension ou solution concentrée grâce auquel la perte d'arôme lors du séchage par évaporation sous vide était fortement réduite. Ce brevet français décrit la préparation d'arômes par une réaction de Maillard faisant intervenir des réactifs traditionnels tels que des hydrolysats de protéines et des monosaccharides. Les hydrolysats sont soumis à une décoloration et une désodorisation au charbon actif avant leur utilisation.

D'autres améliorations encore consistèrent en des choix opportuns de la matière première et des réactifs et impliquèrent notamment des modes de préparation des hydrolysats faisant intervenir des étapes de maturation plus ou moins longues, par exemple à l'aide d'enzymes de viande fraîche.

Cependant, les agents aromatisants de ce type restaient toujours perfectibles, notamment en ce qui concerne la présence d'un arrière-goût trahissant l'origine des matières premières utilisées. C'est ainsi que FR—A—2 321 852 décrit un procédé visant à supprimer l'arrière-goût de levure difficile à éviter lorsqu'une proportion élevée du mélange réactif est constitué par un extrait de levure du commerce. Ce dernier procédé comprend entre autres une étape consistant à traiter l'extrait de levure par distillation à la vapeur avant de le faire participer à la réaction.

GB—A—858 660 décrit un procédé de fabrication d'une substance aromatisante dans lequel on fait réagir un réactif aminé contenant de la cystéine et un aldéhyde en présence d'eau. Le réactif aminé est de préférence un hydrolysat acide de protéines de poisson décoloré par passage au travers d'une courte colonne de charbon actif.

FR—A—1 471 831 décrit diverses compositions aromatisantes obtenues en chauffant un mélange de polypeptides ou acides aminés soufrés et de thiamine ainsi qu'éventuellement un aldéhyde ou une cétone. Ces compositions peuvent être diluées à l'aide d'un support, notamment des polysaccharides tels que gomme arabique, gomme adragante ou carboxyméthylcellulose p. ex. Ces supports auraient un effet stabilisateur sur la composition.

Néanmoins, outre que le problème de l'arrière-goût est malgré tout loin d'être définitivement résolu, notamment en ce qui concerne d'autres matières premières typiques telles que les hydrolysats de protéine végétale, il est un autre problème qui est loin d'être résolu, à savoir celui de la détérioration de l'arôme lors du séchage suivant la réaction.

La présente invention a pour but de résoudre ces problèmes.

A cet effet, le procédé selon la présente invention est caractérisé par le fait que l'on prépare une solution de ladite source d'acides aminés libres présentant une teneur en matière sèche inférieure à 50% en poids, ladite source d'acides aminés libres étant un hydrolysat de protéines végétales ou animales ou un extrait de microorganismes riches en protéines, on soumet la solution à un fractionnement sur une colonne de charbon actif granulaire, on recueille une partie des fractions, on prépare un mélange à 45—80% en poids de matière sèche des fractions receuillies et des additifs, les additifs comprenant au moins un monosaccharide à raison de 0,5 à 10% en poids du mélange et, le cas échéant, ladite substance contenant du soufre à raison de 0,5 à 3% en poids du mélange, la substance contenant du soufre étant la cystéine, la cystine, la méthionine ou la thiamine, on ajuste le pH du mélange à une valeur comprise entre 5 et 7, on fait réagir le mélange par chauffage à une température de 80 à 150°C durant un temps compris entre 1 min et 4 h, on prélève et/ou l'on fixe une fraction aromatique du produit de réaction, on sèche ce produit sous vide et, au cas où l'on a prélevé une fraction aromatique du produit de réaction, on restitue au moins une partie de cette fraction au produit sec sous forme de concentré.

Le présent procédé est issu de l'étude des matières premières les plus couramment utilisées comme sources d'acides aminés pour la fabrication d'agents aromatisants dont le goût rappelle celui de la viande. On peut noter ici en passant que dans le présent exposé le mot goût est utilisé dans un sens général qui couvre l'ensemble des sensations organoleptiques exprimées par les termes de goût et d'odeur ou de saveur et d'arôme. Ces matières premières les plus couramment utilisées dans ce genre d'industrie et qui se prêtent particulièrement bien à la mise en oeuvre du présent procédé sont les hydrolysats acides ou enzymatiques de protéines végétales ou animales, et les extraits de microorganismes riches en protéines, notamment les hydrolysats acides de tourteux d'oléagineuses, la source de soja et les autolysats de levure. Mais il est entendu que d'autres types d'hydrolysats d'autres matières riches en protéines, telles que le sang, les abats, les résidus de sucraterie ou les germes de céréales par exemple, et d'autres types d'extraits d'autres microorganismes tels que des bactéries cultivées sur des substrats à base d'hydrocarbures par exemple pourraient également être utilisés avec succès pour la mise en oeuvre du présent procédé.

On a constaté que la qualité du produit final pouvait être améliorée de manière remarquable par la conjugaison de deux effets qui survenant isolément sont bien perceptibles mais qui survenant ensemble se renforcent de manière décisive. Le premier effet mis en évidence et exploité dans la présente invention est celui du fractionnement de la source d'acides aminés lors de sa purification par passage au travers d'une colonne remplie de charbon granulaire. Ainsi, lors du passage à travers la colonne on n'obtient pas seulement une adsorption de substances colorantes, odorantes ou à goût prononcé, mais également un déplacement gustativement exploitable dans la répartition des acides aminés. En sélectionnant ou en calibrant les fractions, on obtient une source d'acides aminés claire et neutre de goût qui ne masquera pas l'arôme dégagé ensuite lors de la réaction de Maillard. Or, il s'est avéré que l'essentiel du bénéfice de cette première opération était perdu tant que l'arôme dégagé lors de la réaction de Maillard pouvait s'échapper librement lors de la concentration ou du séchage sous vide qui la suivait. C'est ainsi que l'on a été amené à constater que l'on pouvait conserver cet arôme en se presque intégralité en prélevant et/ou en fixant une fraction aromatique du produit de réaction avant de le sécher sous vide.

Pour prélever la fraction aromatique, on peut procéder par distillation avec un gaz choisi dans un groupe comprenant la vapeur d'eau, l'air, l'azote, le gaz carbonique et leurs mélanges, recueillir un distillat, le concentrer et restituer une partie au moins du concentré au produit sec. Pour fixer la fraction aromatique, on peut ajouter au produit de réaction un agent fixateur choisi dans un groupe comprenant les amidons, les dextrines et les fibres végétales, notamment les amidons de riz et de blé, la maltodextrine et les fibres de carottes et de pommes de terre. L'effet ainsi obtenu combiné à celui du fractionnement sur colonne de charbon actif granulaire permet d'obtenir un agent aromatisant où l'arrière-goût de la matière première cède complètement le pas à l'arôme dégagé durant la réaction de Maillard.

Par ailleurs, on sait que la note caractéristique de viande de boeuf, de poulet, de porc, de mouton ou même de poisson par exemple de ce genre d'agent aromatisant peut être conférée par l'addition au mélange à chauffer d'une petite quantité de graisse ou d'huile de l'animal en question. Le présent procédé se prête particulièrement bien à ce type de caractérisation par le fait que la note caractéristique dégagée par la réaction de Maillard en présence de la graisse ou de l'huile spécifique ne sera ni masquée ni perdue dans le produit final.

De même, on sait que l'1-octen-3-ol est un composé aromatique caractéristique des champignons. A l'aide du présent procédé et en ajoutant au mélange ou au produit de réaction une quantité infime de ce composé on peut obtenir également un agent aromatisant présentant une note particulièrement pure et caractéristique de champignon.

Lors de la mise en oeuvre du présent procédé et de ses modes d'exécution préférés décrits ci-dessus, on peut travailler dans les conditions exposées ci-après. On peut prendre par exemple un hydrolysat de protéine végétale obtenu par cuisson à l'acide chlorhydrique de tourteaux d'oléagineuses, neutralisation et filtration, seul ou en combinaison avec un autolysat de levure obtenu par hydrolyse à l'aide des enzymes naturelles des levures et séparation des insolubles, et l'on peut en préparer une solution présentant une teneur en matière sèche inférieure à environ 50%. On peut réaliser le fractionnement sur colonne de charbon actif à chaud, à une température de 55 à 65°C, de manière à pouvoir travailler avec un débit intéressant. Les dimensions de la colonne ainsi que la qualité du charbon actif granulaire peuvent être choisis en fonction du débit désiré et de l'effet recherché que l'on peut caractériser par la mesure de l'extinction des différentes fractions sortant de la colonne. Si l'on mesure l'extinction à 525 nm à travers une cuvette de 1 cm d'épaisseur remplie d'une solution à 45% de matière sèche, on constate que ce sont les fractions présentant une extinction de env. 0,04—0,06 qui présentent la composition la plus favorable et donnent les meilleurs agents aromatisants. On a constaté que l'on peut retenir également les fractions qui précèdent et/ou un certain nombre de fractions qui suivent jusqu'à une extinction de 0,6 tout en obtenant encore de bons résultats. C'est ainsi que, de préférence, on travaille avec un débit correspondant à 1—2 fois le volume de la colonne par heure, on fait passer sur la même charge de charbon actif granulaire une quantité de solution correspondant à 5—10 fois le volume de la colonne et l'on régénère ensuite le charbon actif à chaud, p. ex. à 90°C, avec une solution à quelques pourcents d'hydroxyde de sodium.

Si l'on désire réaliser le procédé en continu, on peut travailler avec une batterie de colonnes. Une autre charge peut être régénérée 6—8 fois avec la solution de soude, après quoi on peut le soumettre à une régénération totale en la portant à incandenscence dans un four à 850—900°C.

On peut former un mélange à 45—80% de matière sèche de fractions recueillies et des additifs et ajuster son pH à une valeur comprise entre 5 et 7.

Parmi les additifs, le monosaccharide peut être ajouté au mélange à raison de 0,5 à 10% et, le cas échéant, la substance contenant du soufre peut être ajoutée à raison de 0,5 à 3%. Le monosaccharide peut être ou un mélange d'entre eux, notamment le xylose, l'arabinose, le fructose et/ou le glucose. La substance contenant du soufre peut être choisie dans le groupe comprenant le cystéine, la cystine, la méthionine, la thiamine et leurs mélanges. On peut également ajouter au mélange d'autres ingrédients, arômes ou renforçateurs d'arômes tels que des épices ou des extraits d'épices, notamment de l'extrait d'oignon ou de la poudre d'ail, ainsi que des nucléotides, notamment l'inosine monophosphate, ou encore du glutamate ou de l'acide citrique par exemple. Enfin, la graisse ou l'huile mentionnée plus haut peut être ajoutée avant ou pendant la réaction de Maillard à raison de 0,5 à 15%. Quant à l'1-octen-3-ol également mentionné plus haut, il peut être ajouté avant ou après la réaction de Maillard, à raison de environ 0,1 à 0,6%. Dans ce dernier cas, on n'ajoute pas de substance contenant du soufre, pour que le goût de rôti ne masque pas l'arôme de champignon. Pour réaliser le mélange efficacement, on peut tout d'abord mélanger intimement les réactifs et ingrédients en question avec une partie de la pâte, puis ajouter ce prémélange au reste de la pâte et brasser le tout dans un mélangeur à double manteau par exemple.

On peut effectuer la réaction de Maillard par chauffage du mélange à une température de 80 à 150°C, de préférence 95—105°C, durant un temps d'autant plus court que la température est élevée et qui est compris entre 1 min et 4 h, de préférence 30 à 60 min. On peut réaliser le chauffage directement dans le mélangeur, si l'on a utilisé un mélangeur à double manteau, ou dans un échangeur de chaleur à surface raclée ou encore par injection ou passage de vapeur à travers la masse par exemple.

Pour prélever une fraction aromatique du produit de réaction, on peut donc le traiter par distillation à l'aide d'un gaz tel que la vapeur d'eau, l'air, l'azote le gaz carbonique ou un mélange d'entre eux, notamment un mélange de vapeur d'eau et d'air. On peut réaliser cette distillation à contre-courant dans une colonne à anneaux raschig ou une colonne à plateaux par exemple, en utilisant une partie en poids de gaz pour environ une à deux parties en poids du produit. Le condensat de la colonne de distillation peut être concentré par exemple dans une colonne de rectification travaillant à un haut taux de reflux. Il est également possible de modifier la composition du concentré aromatique par une distillation fractionnée. Enfin, on a constaté que le pH du distillat avant la réaction avait aussi une certaine influence sur la note aromatique finale. On peut obtenir une note particulièrement bonne en ajustant le pH du distillat avant rectification à une valeur de environ 4,5 à 5,5. On peut obtenir un résultat comparable en ajustant le pH du mélange pâteux à environ 5—6 avant la réaction de Maillard.

Pour restituer le concentré aromatique au produit de réaction après séchage de ce dernier, on peut émulsifier le concentré dans de l'huile ou de la graisse, par exemple, ce qui a pour effet de le stabiliser, et ensuite pulvériser cette émulsion sur le produit sec.

Pour fixer une fraction aromatique dans le produit de réaction avant de le sécher, on peut donc lui ajouter un agent fixateur choisi dans un groupe comprenant les amidons, les dextrines et les fibres végétales, notamment les amidons de riz et de blé, la maltodextrine et les fibres de carottes et de pommes de terre. On peut ajouter l'un ou l'autre de ces agents en des quantités variant entre 10 et 50% par rapport au poids de matière sèche du produit pâteux de réaction. Dans certains cas, on peut même ajouter l'agent fixateur avant la réaction.

On peut également prélever une première fraction aromatique par distillation à l'aide d'un gaz comme exposé plus haut et fixer une seconde fraction aromatique comme exposé ci-dessus.

Enfin, on peut réaliser l'opération du séchage sous une pression réduite de l'ordre de 16 à 27 mbars, à une température de l'ordre de 60 à 70°C et durant un temps de l'ordre de 1 à 8 h de manière que la teneur en humidité du produit séché ne dépasse pas environ 3%. Pour ce séchage, on étend de préférence le produit en couche peu épaisse sur des plateaux, à raison de 1 à 12 kg de produit par m², afin de ne pas prolonger la durée du séchage. On peut ensuite réduire en poudre le produit séché en le cassant et en le broyant dans un moulin adéquat. On peut également réaliser le séchage par atomisation. On peut alors, le cas échéant, lui restituer comme décrit ci-dessus la fraction aromatique que l'on aura prélevée en concentrée avant le séchage.

Le produit sec sous forme pulvérulente peut être incorporé à toute une gamme de produits alimentaires tels que potages, sauces, condiments, bouillons etc.

Les exemples ci-après sont donnés à titre d'illustration. Les rapports, parties et pourcentages y sont exprimés en poids, sauf indication contraire, de même que dans l'exposé général qui précède.

## Exemple 1

On hydrolyse des tourteaux d'arachide avec de l'acide chlorhydrique concentré, on neutralise avec de l'hydroxyde de sodium et l'on sépare les insolubles. On obtient un hydrolysat de protéine végétale sous forme de solution.

On ajuste la teneur en matière sèche de la solution à 45%. On préchauffe la solution à 60°C. On la fait passer de haut en bas à travers une colonne à double manteau présentant un volume de 2,2 l et remplie de charbon actif granulaire du type Pittsburgh (marque déposée) de la firme Chemviron. On fait passer 10 l de solution à un débit de 3,3 l par heure. On la refroidit à température ambiante et on la recueille par fractions de 1 litre. Les trois premières fractions présentent une extinction, telle que définie plus haut, inférieure à 0,05. Les fractions suivantes présentent une extinction croissante allant de 0,12 pour la quatrième à 0,56 pour la dixième. On retient et réunit les fractions 4 à 10. On les concentre pour former une pâte à 70% de matière sèche. On mélange et homogénéise 90% de cette pâte, 2% d'inosine monophosphate, 2,7% de chlorhydrate de cystéine, 1,3% d'arabinose, 0,6% de glucose et 3,4% de graisse de poulet. On ajuste le pH du mélange à 5,7. On préchauffe le mélange à 65°C. On le chauffe et le maintient à 90°C durant 20 min en le faisant passer dans une spirale plongée dans un bain d'huile chaude. On le chauffe à 110°C et on le fait passer de haut en bas en 2 ou 3 min à travers une colonne de distillation à plateaux. On effectue la distillation à contre-courant avec de la vapeur d'eau à 110°C, à raison d'une partie de vapeur pour deux parties de solution. On rectifie et concentré le distillat au centième de son poids initial par distillation en deux étapes à un grand taux de reflux dans des colonnes à anneaux raschig. On émulsionne le concentré dans deux fois son poids de graisse. On sèche le produit de réaction sous une pression réduite d'environ 16 à 27 mbars à 65°C durant 2 h. On le casse et le réduit en poudre. On pulvérise le concentré émulsionné sur cette poudre tout en la brassant énergiquement. On obtient un agent aromatisant d'une belle couleur claire présentant un goût de poulet particulièrement pur et caractéristique.

### Exemple 2

On réalise le procédé de la manière décrite à l'exemple 1, à l'exception du fait que l'on travaille en continu avec un batterie de 4 colonnes de fractionnement telles que celle décrite à ce même exemple 1. On effectue les mêmes opérations sur chacune d'elles, mais avec un décalage d'une heure entre elles. A tour de rôle chaque colonne est sous-traite durant 1 h aux opérations de fractionnement pour être régénérée. A cet effet, on chasse avec de l'eau la dixième et dernière fraction de 1 litre sortant de la colonne après un cycle de 3 heures au cours duquel on a traité 10 l de solution d'hydrolysat, on élève la température du manteau à 90°C et l'on fait traverser la colonne par une solution à 2% d'hydroxyde de sodium à raison de 2 l/min. Après le passage de 9 l on chasse la solution de NaOH avec de l'eau légèrement acidifiée pour neutraliser le charbon. Après 7 cycles de fractionnement, le pouvoir d'adsorbtion du lit de charbon actif est tombé à 60% de sa valeur initiale et le charbon doit être sorti de la colonne et régénéré totalement. On le remplace alors par une charge fraîche ou totalement régénérée. Pour réaliser cette régénération totale, on porte le charbon à incandescence dans un four à 850—900°C. Avec une telle batterie utilisée de cette manière, on réalise l'opération du fractionnement en continu, sans perte de temps et surtout en réalisant une grosse économie de charbon actif puisque pratiquement sa totalité peut être recyclée presque indéfiniment.

### Exemple 3

On réalise 4 essais de la manière décrite à l'exemple 1, à l'exception du fait que l'on remplit chaque fois la colonne de fractionement avec un autre charbon actif granulaire du commerce. On obtient des résultats excellents et comparables à ceux de l'exemple 1 avec le charbon granulaire Pittsburgh (marque déposée) CAL de la firme Chemviron pour lequel les fractions 3 à 10 présentent une extinction croissante allant de 0,07 pour la quatrième à 0,6 pour la dixième.

### Exemple 4

On réalise quelques essais de la manière décrite à l'exemple 1, à l'exception du fait que l'on ajuste le pH du mélange à 6,8 avant la distillation et que l'on ajuste le pH du distillat à différentes valeurs avant de le soumettre à la rectification. Pour des pH du distillat variant de 4 à 9,6 par exemple, on obtient des produits dont le goût de poulet prend une nuance toujours plus corsée et fait place ensuite à un goût de rôti avant de finir par prendre vraiment un goût d'ammoniaque. Les goûts de poulet les plus purs et les moins rudes sont obtenus avec un distillat de pH 4 ou 5. A pH 6,5 on a une note légère de rôti et dès pH 9 le goût d'ammoniaque domine.

### Exemple 5

On prépare une pâte d'hydrolysat fractionné à 70% de matière sèche et de pH 6,8 de la manière décrite à l'exemple 1. Pour 90 kg de cette pâte, on prépare 2 kg d'inosine monophosphate, 2,7 kg de chlorhydrate de cystéine, 1,3 kg de xylose, 0,6 kg de glucose et 3,4 kg de graisse de poulet. On mélange d'abord intimement ces composants avec 5 kg de la pâte, puis on ajoute ce prémélange au reste de la pâte dans une chaudière à double manteau avec agitateur. On brasse le tout énergiquement durant 10 min. On porte la température du mélange à 104°C tout en brassant. On maintient cette température durant 60 min. On transvase le produit de réaction dans une cuve à double manteau refroidie à l'eau froide. On y ajoute de la maltodextrine à raison de 25% en poids de la matière sèche du produit de réaction. On brasse énergiquement durant 10 min. On étale le produit de réaction additionné de maltodextrine sur des plateaux à raison de 5 kg/m² et on le sèche sous une pression réduite de 16 mbars à 65°C durant 4 h. On obtient un gâteau aéré, léger et odorant que l'on broye et réduit en poudre. L'agent aromatisant ainsi obtenu présente un goût fin pur et très net de poulet.

### Exemple 6

De la manière décrite à l'exemple 5, on prépare quelques agents aromatisants rappelant le goût d'autres viandes que celle du poulet. A toutes autres conditions égales, on varie légèrement les formules ainsi que les temps de réaction comme indiqué sur le tableau ci-après:

| Formule | | Goût rappelant celui de la viande de | | | |
|---|---|---|---|---|---|
| | | Boeuf | Mouton | Porc | Poisson |
| Pâte d'hydrolysat | (kg) | 90 | 93,66 | 92,16 | 71,6 |
| Inosine monophosphate | ,, | 4 | 0,74 | 1,96 | 4,00 |
| Glutamate monosodique | ,, | | | | 17,90 |
| Chlorhydrate de cystéine | ,, | 0,75 | 0,75 | 0,49 | 0,75 |
| Thiamine | ,, | 0,75 | | | 0,75 |
| Xylose | ,, | | 0,38 | 0,98 | |
| Glucose | ,, | 1,50 | 0,25 | 0,25 | 1,5 |
| Graisse de boeuf | ,, | 2,75 | | | |
| Graisse de mouton | ,, | | 3,48 | | |
| Graisse de porc | ,, | | | 3,43 | |
| Huile de poisson | ,, | | | | 2,75 |
| Poudre d'ail | ,, | | 0,74 | | 0,75 |
| Extrait d'oignon | ,, | 0,25 | | 0,74 | 0,25 |
| Temps de réaction | (min) | 20 | 50 | 50 | 30 |

Chacun des produits ainsi fabriqués présente effectivement un goût pur et caractéristique de la viande en question.

### Exemple 7

Pour mettre en oeuvre en continu le procédé décrit à l'exemple 5, on réalise la réaction dans un premier échangeur de chaleur à surface raclée et le refroidissement subséquent dans un second échangeur du même type.

### Exemple 8

On prépare un hydrolysat fractioné de la manière décrite à l'exemple 1. On ajuste sa teneur en matière sèche à 60%. A 76 kg de cette solution on ajoute 9 kg de fructose, 9 kg de valine, 2,7 kg d'inosine monophosphate, 2,7 kg d'acide citrique et 0,2 kg d'1-octen-3-ol. On brasse le tout énergiquement, on porte la température du mélange à 100°C et on l'y maintient 60 min. On ajoute de la maltodextrine à raison de 25% en poids de la matière sèche du produit de réaction. On sèche le mélange sous vide sur plateaux durant 4 h à 65°C. On brise et réduit en poudre le produit sec. L'agent aromatisant ainsi obtenu présente un goût pur et franc de champignons.

### Exemple 9

On procède de la manière décrite à l'exemple 5, à l'exception du fait que l'on étale le produit de réaction sur les plateaux à raison de respectivement 1,7; 3,4; 7,2 et 12 kg/m². Pour obtenir un produit bien sec, on doit prolonger le temps de séchage à 4 h pour 7,2 kg/m² et à 5 h $\frac{1}{2}$ pour 12 kg/m². Tous les produits sont bons.

### Exemple 10

On procède de la manière décrite à l'exemple 5, à l'exception du fait que l'on varie la quantité et le genre du fixateur d'arôme. On réalise ainsi 4 essais avec respectivement de l'amidon de riz, de l'amidon de blé, des fibres de carottes et des fibres de pommes de terre tamisées sur mailles de 150 µm, à raison de 35% pour les amidons et 10% pour les fibres. Les couches séchées sont un peu dures dans le cas des amidons, mais à part cela les quatre couches finalement obtenues présentent des qualités organo-leptiques qui soutiennent la comparaison avec celles du produit obtenu à l'exemple 5.

### Revendications

1. Procédé de fabrication d'un agent aromatisant dont le goût rappelle celui de la viande, du poisson ou des champignons, dans lequel on fait réagir par chauffage un mélange liquide ou pâteux contenant au moins une source d'acides aminés libres et des additifs comprenant au moins un monosaccharide et, les cas échéant, au moins une substance contenant du soufre, caractérisé par le fait que l'on prépare une solution de ladite source d'acides aminés libres présentant une teneur en matière sèche inférieure à 50% en poids, ladite source d'acides aminés libres étant un hydrolysat de protéines végétales ou animales ou un extrait de microorganismes riches en protéines, on soumet la solution à un fractionnement sur une colonne de charbon actif granulaire, on recueille une partie des fractions, on prépare un mélange à 45—80% en poids de matière sèche des fractions recueillies et des additifs, les additifs comprenant au moins un monosaccharide à raison de 0,5 à 10% en poids du mélange et, le cas échéant, ladite substance contenant du soufre à raison de 0,5 à 3% en poids du mélange, la substance contenant du soufre étant la cystéine, la cystine, la méthionine ou la thiamine, on ajuste le pH du mélange à une valeur comprise entre 5 et 7, on fait réagir le mélange par chauffage à une température de 80 à 150°C durant un temps compris entre 1 min et 4 h, on prélève et/ou l'on fixe une fraction aromatique du produit de réaction, on sèche ce produit sous vide et, au cas où l'on a prélevé une fraction aromatique du produit de réaction, on restitue au moins une partie de cette fraction au produit sec sous forme de concentré.

2. Procédé selon la revendication 1, caractérisé par le fait que l'on prélève la fraction aromatique par distillation avec un gaz choisi dans un groupe comprenant la vapeur d'eau, l'air, l'azote, le gaz carbonique et leurs mélanges, on recueille un distillat, on le concentre et on restitue une partie au moins du concentré au produit sec.

3. Procédé selon la revendication 1, caractérisé par le fait que l'on fixe une fraction aromatique en ajoutant au produit de réaction un agent fixateur choisi dans un groupe comprenant les amidons, les dextrines et les fibres végétales.

4. Procédé selon la revendication 3, caractérisé par le fait que lesdits amidons, dextrines et fibres végétales sont les amidons de riz et de blé, la maltodextrine et les fibres de carottes et de pommes de terre.

5. Procédé selon la revendication 1, caractérisé par le fait que ladite source d'acides aminés libres est un hydrolysat acide de tourteaux d'oléagineuses ou un autolysat de levures.

6. Procédé selon la revendication 1, caractérisé par le fait que l'on ajoute au mélange à chauffer de la graisse ou de l'huile d'un animal choisi dans le groupe comprenant le boeuf, le poulet, le porc, le mouton et le poisson, à raison de 0,5—15% en poids du mélange.

7. Procédé selon la revendication 1, caractérisé par le fait que l'on prépare un mélange sans composé soufré et l'on ajoute au mélange ou au produit de réaction de l'1-octen-3-ol, à raison de 0,1 à 0,6% en poids du mélange ou du produit.

8. Procédé selon la revendication 1, caractérisé par le fait que l'on fractionne ladite solution sur colonne de charbon actif granulaire à un débit correspondant à une à deux fois le volume de la colonne par heure et l'on recueille des fractions présentant une extinction inférieure à 0,6 mesurée à 525 nm en solution à 45% de matière sèche sur 1 cm d'épaisseur.

9. Procédé selon la revendication 8, caractérisé par le fait que l'on fait passer sur la même charge de charbon actif granulaire une quantité de solution d'acides aminés libres correspondant à 5—10 fois le volume de la colonne et l'on régénère ensuite le charbon actif à chaud avec une solution diluée d'hydroxyde de sodium.

10. Procédé selon la revendication 8, caractérisé par le fait que l'on travaille en continu avec une batterie de colonnes, la charge de charbon actif granulaire de chaque colonne étant régénérée 6—8 fois avec une solution diluée d'hydroxyde de sodium avant d'être régénérée totalement par chauffage à 850—900°C.

11. Procédé selon la revendication 2, caractérisé par le fait que l'on concentre le distillat dans une colonne de rectification, on émulsifie le concentré dans une huile ou dans une graisse et l'on pulvérise l'émulsion sur le produit sec.

12. Procédé selon la revendication 3, caractérisé par le fait que l'on ajoute l'agent fixateur au produit de réaction à raison de 10 à 50% en poids de matière sèche du produit de réaction.

13. Procédé selon la revendication 1, caractérisé par le fait que l'on sèche le produit de réaction sous pression réduite à une température de 60 à 70°C et durant 1 à 8 h de manière que la teneur en humidité du produit séché ne dépasse pas 3%.

## Claims

1. A process for the production of a flavouring agent resembling in taste meat, fish or mushrooms, in which a liquid or pasty mixture containing at least one source of free amino acids and additives including at least one monosaccharide and, where desired, at least one sulphur-containing substance is reacted by heating, characterised by preparing a solution of said source of free amino acids having a dry matter content of less than 50% by weight, said source of free amino acids being a hydrolysate of vegetable or animal proteins or an extract of microorganisms rich in proteins, subjecting the solution to fractionation on a column of granular active carbon, collecting some of the fractions, preparing a mixture of the collected fractions and additives having a dry matter content of from 45 to 80% by weight, which additives include at least one monosaccharide in an amount of from 0.5 to 10% by weight of the mixture and, if desired, the sulphur-containing substance in an amount of 0.5 to 3% by weight of the mixture, said sulphur-containing substance being cysteine, cystine, methionine or thiamine, adjusting the pH of the mixture to between 5 and 7, reacting the mixture by heating at 80—150°C over a period of from 1 minute to 4 hours, removing and/or fixing an aromatic fraction from the reaction product, vacuum drying the reaction product and, in case an aromatic fraction was removed from the reaction product, returning at least part of this fraction in form of a concentrate to the dry product.

2. A process as claimed in Claim 1, wherein the aromatic fraction is removed by stripping with a gas selected from the group comprising steam, air, nitrogen, carbon dioxide and mixtures thereof, a distillate is collected and concentrated and at least part of the concentrate is returned to the dry product.

3. A process as claimed in Claim 1, wherein the aromatic fraction is fixed by adding to the reaction product a fixing agent selected from the group comprising starches, dextrins and vegetable fibres.

4. A process as claimed in Claim 3, wherein said starches, dextrins and vegetable fibres are starches of rice and corn, maltodextrin and fibres of carrot and potato.

5. A process as claimed in Claim 1, wherein the source of free amino acids is an acid hydrolysate of an oilseed cake or a yeast autolysate.

6. A process as claimed in Claim 1, wherein a fat or oil from an animal selected from the group comprising beef, chickens, pigs, sheep and fish is added to the mixture to be heated in an amount of from 0.5 to 15% by weight of the mixture.

7. A process as claimed in Claim 1, wherein 1-octen-3-ol is added to the mixture or to the reaction product in an amount of from 0.1 to 0.6% of the mixture or the product.

8. A process as claimed in Claim 1, wherein said solution is fractionated on a column of granular active carbon at a throughput corresponding to between one or two times the volume of the column per hour and fractions are collected which have an extinction value less than 0.6 as measured at 525 nm in a solution having a dry matter content of 45% through a thickness of 1 cm.

9. A process as claimed in Claim 8, wherein an amount of solution of free amino acids corresponding to between 5 and 10 times the volume of the column is passed through the same batch of granular active carbon, after which the active carbon is regenerated with a dilute solution of sodium hydroxide.

10. A process as claimed in Claim 8, which is carried out continuously using a battery of columns, the active granular carbon filling of each column being regenerated 6 to 8 times with a dilute solution of sodium hydroxide before being completely regenerated by heating to 850—900°C.

11. A process as claimed in Claim 2, wherein the distillate is concentrated by rectification, the concentrate is emulsified in an oil or a fat and the emulsion is sprayed onto the dry product.

12. A process as claimed in Claim 3, wherein the fixing agent is added to the reaction product in an amount of from 10 to 50% by weight, based on the dry matter content of the reaction product.

13. A process as claimed in Claim 1, wherein the reaction product is dried under reduced pressure at 60 to 70°C over a period of 1 to 8 h so that the moisture content of the dried product does not exceed 3%.

## Patentansprüche

1. Verfahren zur Herstellung eines Aromatisierungsmittels, dessen Geschmack an den von Fleisch, Fisch oder Champignons erinnert, in welchem Verfahren durch Erhitzen ein flüssiges oder pastöses Gemisch zur Reaktion gebracht wird, das wenigstens eine Quelle für freie Aminosäuren und Additive enthält, die wenigstens ein Monosaccharid und, im gegebenen Falle, wenigstens eine Schwefel enthaltende Substanz umfassen, dadurch gekennzeichnet, daß man eine Lösung der genannten Quelle von freien Aminosäuren mit einem Trockengehalt von unter 50 Gew.-% bereitet, wobei die genannte Quelle der freien Aminosäuren ein Hydrolysat von pflanzlichen oder tierischen Proteinen oder ein Extrakt von proteinreichen Mikroorganismen ist, die Lösung auf einer Säule aus körniger Aktivkohle einer Fraktionierung unterwirft, einen Teil der Fraktionen auffängt, ein Gemisch mit 45—80 Gew.-% Trockenmaterial der aufgefangenen Fraktionen und aus Additiven bereitet, wobei die Additive wenigstens ein Monosaccharid in einer Menge von 0,5 bis 10 Gew.-% des Gemisches und, im gegebenen Falle, die genannte Schwefel enthaltende Substanz in einer Menge von 0,5—3 Gew.-% des Gemisches umfassen, wobei die Schwefel enthaltende Substanz Cystein, Cystin, Methionin oder Thiamin ist, den pH-Wert des Gemisches auf einen Wert zwischen 5 und 7 einstellt, das Gemisch durch Erhitzen auf eine Temperatur von 80 bis 150°C während einer Zeit zwischen einer Minute und vier Stunden zur Reaktion bringt, eine Aromafraktion des Reaktionsproduktes abzieht und/oder fixiert, dieses Produkt im Vakuum trocknet und im Falle, daß man eine Aromafraktion vom Reaktionsprodukt abgezogen hat, wenigstens einen Teil dieser Fraktion dem trockenen Produkt in Form eines Konzentrates wieder zusetzt.

2. Verfahren nach Anspruch 1, dadurch gekennzeichnet, daß man die Aromafraktion durch Destillation mit einem Gas, ausgewählt aus einer Wasserdampf, Luft, Stickstoff, Kohlendioxidgas und deren Gemische umfassenden Gruppe, abzieht, ein Destillat gewinnt, dieses konzentriert und wenigstens einen Teil des Konzentrats dem trockenen Produkt wieder zusetzt.

3. Verfahren nach Anspruch 1, dadurch gekennzeichnet, daß man eine Aromafraktion durch Zugabe eines Fixierungsmittels, ausgewählt aus einer die Stärken, Dextrine und Pflanzenfasern umfassenden Gruppe, zu dem Reaktionsprodukt fixiert.

4. Verfahren nach Anspruch 3, dadurch gekennzeichnet, daß die genannten Stärken, Dextrine und Pflanzenfasern, Reis- und Weizenstärken, Maltodextrin und Karotten- und Kartoffelfasern sind.

5. Verfahren nach Anspruch 1, dadurch gekennzeichnet, daß die genannte Quelle der freien Aminosäuren ein Säurehydrolysat von Kuchen ölhaltiger Pflanzen oder ein Autolysat von Hefen ist.

6. Verfahren nach Anspruch 1, dadurch gekennzeichnet, daß man dem zu erhitzenden Gemisch ein Fett oder ein Öl eines aus der Rind, Huhn, Schwein, Schaf und Fisch umfassenden Gruppe ausgewählten Tieres in einer Menge von 0,5 bis 15 Gew.-% des Gemisches zusetzt.

7. Verfahren nach Anspruch 1, dadurch gekennzeichnet, daß man ein Gemisch ohne Schwefelverbindung bereitet und dem Gemisch oder dem Reaktionsprodukt 1-Octen-3-ol in einer Menge von 0,1 bis 0,6 Gew.-% des Gemisches oder des Produktes zusetzt.

8. Verfahren nach Anspruch 1, dadurch gekennzeichnet, daß man die genannte Lösung auf einer Säule mit körniger Aktivkohle mit einem Durchsatz fraktioniert, der dem ein- bis zweifachen des Volumens der Säule je Stunde entspricht, und daß man die eine Extinktion unter 0,6, gemessen bei 525 nm xin einer Lösung mit 45% Trockenmaterial bei 1 cm Schichtdicke, aufweisenden Fraktionen auffängt.

9. Verfahren nach Anspruch 8, dadurch gekennzeichnet, daß man über die gleiche Charge an körniger Aktivkohle eine Menge an Lösung der freien Aminosäuren führt, die dem fünf- bis zehnfachen des Volumens der Säule entspricht, und daß man anschließend die Aktivkohle in der Hitze mit einer verdünnten Natriumhydroxidlösung regeneriert.

10. Verfahren nach Anspruch 8, dadurch gekennzeichnet, daß man kontinuierlich mit einer Batterie von Säulen arbeitet, wobei die Charge an körniger Aktivkohle jeder Säule sechs- bis achtmal mit einer verdünnten Natriumhydroxidlösung regeneriert wird, bevor sie vollständig durch Erhitzen auf 850 bis 900°C regeneriert wird.

11. Verfahren nach Anspruch 2, dadurch gekennzeichnet, daß man das Destillat in einer Rektifikationskolonne konzentriert, das Konzentrat in einem Öl oder einem Fett emulgiert und die Emulsion auf das trockene Produkt aufsprüht.

12. Verfahren nach Anspruch 3, dadurch gekennzeichnet, daß man das Fixierungsmittel dem Reaktionsprodukt in einer Menge von 10 bis 50 Gew.-% des Trockenmaterials des Reaktionsproduktes zusetzt.

13. Verfahren nach Anspruch 1, dadurch gekennzeichnet, daß man das Reaktionsprodukt unter vermindertem Druck bei einer Temperatur von 60 bis 70°C und während 1 bis 8 Stunden derart trocknet, daß der Feuchtigkeitsgehalt des getrockneten Produktes 3% nicht überschreitet.